# EUROPÄISCHE PATENTSCHRIFT

(11) **EP 1 406 833 B1**
(45) Veröffentlichungstag und Bekanntmachung des Hinweises auf die Patenterteilung: **17.11.2004**
(21) Anmeldenummer: 02767163.5
(22) Anmeldetag: 02.07.2002
(51) Int. Cl.: C01B 21/14, B01D 3/16, B01J 19/30

(54) **VERFAHREN ZUR HERSTELLUNG EINER SALZFREIEN, WÄSSRIGEN HYDROXYLAMINLÖSUNG**
METHOD FOR PRODUCING AN AQUEOUS HYDROXYLAMINE SOLUTION DEVOID OF SALT
PROCEDE POUR PRODUIRE UNE SOLUTION AQUEUSE D'HYDROXYLAMINE SANS SEL

(30) Priorität: 04.07.2001 DE 10131788
(43) Veröffentlichungstag der Anmeldung: 14.04.2004
(73) Patentinhaber: BASF AKTIENGESELLSCHAFT, 67056 Ludwigshafen (DE)
(72) Erfinder: WOSTBROCK, Karl-Heinz, 67591 Mörstadt (DE); THIEL, Joachim, 67435 Neustadt (DE); KRÜGER, Heinz, 67117 Limburgerhof (DE); STRÖFER, Eckhard, 68163 Mannheim (DE); WEBER, Markus, 67063 Ludwigshafen (DE); GERBER, Bernd, 67069 Ludwigshafen (DE); RUMPF, Bernd, 68766 Hockenheim (DE); SACHWEH, Bernd, 67149 Meckenheim (DE); KERTH, Steffen, 67063 Ludwigschafen (DE)
(86) Internationale Anmeldenummer: PCT/EP2002/007271
(87) Internationale Veröffentlichungsnummer: WO 2003/004407

(56) Entgegenhaltungen:
- EP-A- 0 188 387
- WO-A-97/22551
- DE-A- 19 725 851
- US-B1- 6 235 162
- K. SATTLER (ED.): "Thermische Trennverfahren: Grundlagen, Auslegung, Apparate (3rd edition)" 2001 , WILEY-VCH , WEINHEIM (DE) XP002217526 Seite 242 -Seite 249; Abbildung 2.80
- D.W. GREEN (ED.): "Perry's Chemical Engineer's Handbook" 1997 , MCGRAW-HILL , NEW YORK (USA) XP002217527 Seite 14-23 -Seite 14-61

## Beschreibung

Die vorliegende Erfindung betrifft ein Verfahren zur Herstellung einer hochreinen, wässrigen Hydroxylaminlösung durch Destillation einer salzfreien, wässrigen Hydroxylaminlösung in einer Bodenkolonne mit mindestens zwei mechanischen Böden, dadurch gekennzeichnet, daß sich zwischen mindestens zwei Böden der Bodenkolonnen über den Querschnitt der Kolonne Füllkörper befinden.

Hochreine, konzentrierte, wässrige Hydroxylamin-Lösungen werden unter anderem in der Elektronikindustrie, z.B. in Verbindung mit anderen Stoffen zum Reinigen von Platinen oder Silizium-Wafern, verwendet. Für die Anwendung in der Elektronikindustrie werden üblicherweise Konzentrationen der Verunreinigungen, insbesondere Metallionen, weit unter 1 ppm, sogenannte "Electronic grade"-Ware, gefordert. Dabei nehmen die Anforderungen an die Reinheit der wässrigen Hydroxylamin-Lösungen ständig zu.

Hochreine, konzentrierte, wässrige Hydroxylamin-Lösungen werden üblicherweise aus salzfreien, wässrigen Hydroxylamin-Lösungen hergestellt.

Hydroxylamin wird großtechnisch als Hydroxylammoniumsalz, üblicherweise als Hydroxylammoniumsulfat, hergestellt. Zur Herstellung salzfreier, wässriger Hydroxylamin-Lösungen wird eine wässrige Lösung eines Hydroxylammoniumsalzes mit einer Base versetzt und eine wässrige Hydroxylamin-Lösung von dem Gemisch üblicherweise durch Destillation abgetrennt, beispielsweise gemäß US-A-5,472,679, WO 97/22551, WO 98/57886, WO 97/22550, WO 99/07637. Hierbei werden üblicherweise verdünnte, salzfreie, wässrige Hydroxylamin-Lösungen erhalten.

Aus solchen verdünnten, salzfreien, wässrigen Hydroxylamin-Lösungen werden üblicherweise durch erneute Destillation hochreine, konzentrierte, wässrige Hydroxylamin-Lösungen erhalten, bespielsweise gemäß US-A-5,472,679, WO 97/22551, WO 98/57886, WO 97/22550, WO 99/07637.

EP 188 387 A2 offenbart eine gepackte Kolonne zur Fraktionierung, bei der jedoch über- und unterhalb der Zuleitungen und Entnahmestellen mechanische Böden vorgesehen sind, um durch ihren größeren Druckverlust und die größere Flüssigkeitsmenge auf diesen Böden die ansonsten durch Zufuhr oder Entnahme von Kolonneninhalt auf die Packung möglicherweise einwirkenden Schwankungen abzumildern. Diese Kolonne wird insbesondere empfohlen, wenn der zu fraktionierende Stoffstrom unterkühlt oder überhitzt in die Kolonne geleitet wird. K. Sattler (Hrsg.): Thermische Trennverfahren, 3. Auflage, Wiley-VCH, Weinheim 2001, S. 242-249, gibt einen Überblick über verschiedene Füllkörper und Packungen Kolonnen. D.W. Green (Hrsg.): Perry's Chemical Engineer's Handbook, McGraw-Hill, New York 1997, S. 14-21 bis 14-61 gibt einen Überblick über Gas-Flüssigkeits-Kontaktapparate wie etwa Kolonnenböden und Bodenkolonnen sowie Packungen, Füllkörper und gepackte und Füllkörper-Kolonnen.

US 6 235 162 offenbart ein zweistufiges Verfahren zur Reinigung von Hydroxylaminlösungen, bei dem in einer ersten Stufe leichtflüchtige Bestandteile (wie organische Lösungsmittel, Ammoniak, Stickstoff oder andere Gase) aus der Lösung über eine gepackte Kolonne ausgetrieben werden. In einer anschließenden zweiten Stufe wird die in der Vorlage verbliebende, von leichtflüchtigen Bestandteilen befreite Hydroxylaminlösung einer einfachen Destillation unterzogen und so von nichtflüchtigen Bestandteilen befreit.

Die Destillation von wässrigen, Hydroxylamin enthaltenden Lösungen, selbst im Labormaßstab, wird als eine besonders gefährliche Operation bezeichnet: siehe Roth-Weller: Gefährliche Chemische

Reaktionen, Stoffinformationen Hydroxylamin, Seite 3, 1984, 2, Eco-med-Verlag.

Demgemäß erfordert die genannte Destillation einen hohen technischen Aufwand und einen großen Zeitbedarf.

Zudem enthalten hochreine, konzentrierte, wässrige Hydroxylaminlösungen trotz der zweiten Destillation aus der Herstellung Verunreinigungen, wie Natriumsulfat oder andere Metallverbindungen in unerwünscht großen Mengen.

Der vorliegenden Erfindung lag daher die Aufgabe zugrunde, ein Verfahren zur Herstellung hochreiner, konzentrierter, wässriger Hydroxylamin-Lösungen durch Destillation bereitzustellen, bei dem die hochreinen, konzentrierten, wässrigen Hydroxylamin-Lösungen mit weniger Verunreinigungen ohne Erhöhung des technischen Aufwands, des Zeitbedarfs oder eines Sicherheitsrisikos erhalten werden.

Unter hochrein werden im Sinne der vorliegenden Erfindung Metallionengehalte unter 1 ppm und Hydroxylamin-Gehalte von mehr als 20 Gew.-% Hydroxylamin bezogen auf die Lösung verstanden.

Demgemäß wurde das eingangs definierte Verfahren gefunden.

In dem erfindungsgemäßen Verfahren setzt man eine salzfreie, wässrige Hydroxylamin-Lösung ein. Die Herstellung solcher Lösungen ist an sich bekannt und kann beispielsweise nach den Verfahren gemäß US-A-5,472,679, WO 97/22551, WO98/57886, DE 1954775.8 oder WO 99/07637 erfolgen.

Solche salzfreien, wässrigen Hydroxylamin-Lösungen weisen im allgemeinen einen Gehalt an Hydroxylamin von 10 bis 300, vorzugsweise 80 bis 150 g/Liter und einen Gehalt an Verunreinigungen, wie Natriumsulfat oder Metallionen im Bereich von 0,005 bis 25 ppm auf.

Erfindungsgemäß destilliert man eine salzfreie, wässrige Hydroxylamin-Lösung in einer Bodenkolonne mit mindestens 10 praktischen Böden.

Als Böden kommen Querstromböden wie Siebböden, Ventilböden, Glokkenböden und Tunnelböden oder Dualflow-Böden , vorzugsweise Siebböden in Betracht. Die Abstände der Böden voneinander sollte im Bereich von 200 bis 900 mm, vorzugsweise 300 bis 600 mm liegen.

Die Kolonne und Böden können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, daß die Kolonne auch aus speziellen metallischen Werkstoffen, wie Platin, Silber oder Zirkon gefertigt werden können, ohne dass eine signifikant erhöhte Zersetzung des Hydroxylamins zu beobachten ist.

Vorteilhaft wird ein Fallfilmverdampfer zum Beheizen des Kolonnensumpfes verwendet, es lassen sich natürlich auch andere übliche Sumpfbeheizer, wie Natur- oder Zwangsumlaufverdampfer, Plattenwärmetauscher etc. einsetzen.

Das Rücklaufverhältnis im Verstärkerteil kann man vorteilhaft so einregeln, dass es im Bereich von 0,2 bis 2 liegt.

Erfindungsgemäß befinden sich oberhalb mindestens eines Bodens der Bodenkolonne über den Querschnitt der Kolonne klassische Füllkörper wie Raschig-Ringe, Pallringe, Sattelkörper, moderne Hochleistungs-Füllköper wie der Hiflow-Ring (Firma Rauschert (Steinwiesen, Deutschland)), Super-Raschig-Ringe (Firma Raschig (Ludwigshafen, Deutschland)), Cascade-Mini-Ringe ( Firma Koch-Glitsch (Wichita, USA)), IMTP-Ringe (Firma Norton (Akron, USA) oder Nutter-Ringe (Firma Sulzer Chemtech (Wintherthur, Schweiz)) oder strukturierte Packungen wie Mellapak, Mellapak Plus oder Gewebepackung, vorzugsweise moderne Hochleistungs-Füllkörper.

Die Füllkörper sollten gegenüber der zu destillierenden Lösung inert sein, beispielsweise aus Kunststoffen oder speziellen metallischen Werkstoffen vorzugsweise aus perfluorierten Kunststoffen (z.B. TFM, PFA, Teflon).

Die Füllhöhe der Füllkörper zwischen den Böden sollte 50 bis 300 mm, vorzugsweise 100 mm bis 200 mm betragen. Der Abstand zwischen der Füllkörper-Schüttung und dem Boden, oberhalb dessen die Füllkörper-Schüttung installiert ist, liegt zwischen 0 und 600 mm, bevorzugt 100 mm bis 300 mm. Der Abstand zwischen der Füllkörper-Schüttung und dem Boden, unterhalb dessen die Füllkörper-Schüttung installiert ist beträgt, 0 bis 300 mm, bevorzugt 30 bis 100 mm.

Vor der Anwendung des erfindungsgemäßen Verfahrens kann es vorteilhaft sein, einen Stabilisator zuzugeben. Geeignete Stabilisatoren sind an sich bekannt und kommerziell erhältlich.

Die Hydroxylamin-Lösung kann man vorteilhaft in Höhe von etwa einem Drittel der theoretischen Bodenzahl der Bodenkolonne einspeisen. Man erhält über Kopf weitgehend hydroxylamin-freies Wasser und am Sumpf eine Hydroxylamin-Lösung, deren Konzentration von den Destillationsbedingungen abhängig ist.

Im allgemeinen arbeitet man in der Destillationskolonne mit einem Druck im Bereich von 1 bis 200 kPa (0,01 bis 2 bar), vorzugsweise 5 bis 120 kPa (0,05 bis 1,2 bar), besonders bevorzugt 30 bis 110 kPa (0,3 bisl,1 bar), wobei sich der Druck jeweils auf dem Druck am Kopf/Sumpf der Kolonne bezieht. Je höher das Hydroxylamin aufkonzentriert werden soll, umso schonender (niedriger Druck und niedrige Temperatur) muss destilliert werden. Die Destillation kann kontinuierlich oder diskontinuierlich erfolgen.

Die in der Destillationskolonne herrschenden Temperaturen richten sich nach dem Druck, bei dem die Destillationskolonne betrieben wird. Sie liegen im allgemeinen im Bereich von 10 bis 160°C, vorzugsweise 60 bis 110°C.

Das über Kopf der Destillationskolonne abgezogene Wasser bzw. der Brüden kann wieder direkt oder nach Kompression oder Überhitzung als Stripdampf in den Sumpf der im erfindungsgemäßen Verfahren eingesetzten Kolonne zurückgeführt oder als Abwasser der Abwasseraufbereitung zugeführt werden.

Gegebenenfalls kann man über dem Zulaufboden eine Einrichtung zur Abscheidung mitgerissener Tröpfchen, beispielsweise einen Demister, installieren.

Die aufkonzentrierte, wässrige Hydroxylamin-Lösung, die vorzugsweise einen Hydroxylamin-Gehalt von mehr als 20, bevorzugt mehr als 40 und insbesondere mehr als 50 Gew.-% Hydroxylamin und weniger als 1 ppm, insbesondere weniger als 0,1 ppm Metallionen (insbesondere aus der Herstellung oder den für die Herstellung und Gewinnung verwendeten Werkstoffen) enthält, wird im allgemeinen als Sumpfprodukt erhalten.

Die nach dem erfindungsgemäßen Verfahren erhaltene hochreine, wässrige Hydroxylamin-Lösung weist eine höhere Reinheit auf als eine nach bekannten Destillationsverfahren erhaltene Lösung. Des weiteren ist der Verlust an Hydroxylamin über das auszuschleusende Wasser geringer. Zudem ist die Verweilzeit der Destillationsmischung in der Kolonne kürzer und somit die thermische Belastung geringer als bei bekannten Verfahren. Ferner wird bei gleicher Kolonnengröße und gleichem Holdup der Kolonne die Kapazität der Kolonne erhöht. Falls die Kolonne einen Demister enthält, wird dieser gegenüber einem bekannten Verfahren entlastet.

### Beispiele

### Vergleichsbeispiel 1

In einer Bodenkolonne mit 33 Böden und einem Durchmesser von 1,3 m wurde auf den achten Boden von unten in einer Menge von 2,2 t/h eine Lösung von 8,9 Gew.-% Hydroxylamin (freie Base) in Wasser gegeben.

Am Kopf wurde bei einer Rücklaufmenge von 0,9 t/h und einer Zugabe von 10 kg/h Stabilisator eine Menge von 1,9 t/h Wasser mit einem Hydroxylamin-Gehalt von 1500 Gew.-ppm entnommen.

Am Sumpf wurden 350 kg/h einer Lösung von 50 Gew.-% Hydroxylamin in Wasser entnommen.

Der Druckverlust über die Kolonne betrug 100 mbar, der Energieeintrag in den Sumpfverdampfer 2,8 t/h Dampf.

### Beispiel 1

Es wurde verfahren wie in Vergleichsbeispiel 1 mit der Ausnahme, daß sich auf den Böden jeweils eine 150 mm hohe Schüttung aus Hiflow-Ringen 38/1 (Firma Rauschert, Steinwiesen, Deutschland) befand.

Es wurden die Ergebnisse wie in Vergleichsbeispiel 1 erhalten, mit der Ausnahme, daß das als Kopfprodukt erhaltene Wasser nur 1000 Gew.-ppm Hydroxylamin enthielt.

### Beispiel 2

Es wurde verfahren wie in Beispiel 1 mit der Ausnahme, daß der Zulauf 3,4 t/h betrug.

Am Kopf wurde bei einer Rücklaufmenge von 1,4 t/h und einer Zugabe von 15 kg/h Stabilisator eine Menge von 2,9 t/h Wasser mit einem Hydroxylamin-Gehalt von 1000 Gew.-ppm entnommen.

Am Sumpf wurden 540 kg/h einer Lösung von 50 Gew.-% Hydroxylamin in Wasser entnommen.

Der Druckverlust über die Kolonne betrug 130 mbar, der Energieeintrag in den Sumpfverdampfer 4,3 t/h Dampf.

## Patentansprüche

1. Verfahren zur Herstellung einer hochreinen, wässrigen Hydroxylaminlösung durch Destillation einer salzfreien, wässrigen Hydroxylaminlösung in einer Bodenkolonne mit mindestens zwei mechanischen Böden, **dadurch gekennzeichnet, daß** sich oberhalb mindestens eines Boden der Bodenkolonne über den Querschnitt der Kolonne Füllkörper befinden.

2. Verfahren nach Anspruch 1, wobei die Bodenkolonne 10 bis 50 mechanische Böden aufweist.

3. Verfahren nach Anspruch 1 oder 2, wobei man als Füllkörper klassische Füllkörper, Hochleistungs-Füllkörper oder strukturierte Packungen einsetzt.

4. Verfahren nach den Ansprüchen 1 bis 3, wobei die Temperatur in der Bodenkolonne im Bereich von 10 °C bis 160°C liegt.

5. Verfahren nach den Ansprüchen 1 bis 4, wobei man als Bodenkolonnen eine Querstrom-Bodenkolonne oder Dualflow-Boden-Kolonne einsetzt.

## Claims

1. A process for the preparation of a highly pure, aqueous hydroxylamine solution by distillation of a salt-free, aqueous hydroxylamine solution in a plate-type column having at least two mechanical plates, wherein, above at least one plate of the plate-type column, packing materials are situated over the cross section of the column.

2. A process as claimed in claim 1, the plate-type column having 10 to 50 mechanical plates.

3. A process as claimed in claim 1 or 2, the packing materials employed being classical packing materials, high-efficiency packing materials or structured packings.

4. A process as claimed in claims 1 to 3, the temperature in the plate-type column being in the range from 10°C to 160°C.

5. A process as claimed in claims 1 to 4, the plate-type columns employed being a cross flow plate-type column or dual flow plate-type column.

## Revendications

1. Procédé pour la préparation d'une solution aqueuse d'hydroxylamine à pureté élevée par distillation d'une solution aqueuse d'hydroxylamine exempte de sels dans une colonne à plateaux comprenant au moins deux plateaux mécaniques, **caractérisé en ce que** des corps de remplissage sont disposés au-dessus d'au moins un plateau de la colonne à plateaux, en s'étendant sur la section transversale de la colonne.

2. Procédé selon la revendication 1, dans lequel la colonne à plateaux présente de 10 à 50 plateaux mécaniques.

3. Procédé selon la revendication 1 ou 2, dans lequel on met en oeuvre, à titre de corps de remplissage, des corps de remplissage classiques, des corps de remplissage à haut rendement ou encore des garnissages structurés.

4. Procédé selon les revendications 1 à 3, dans lequel la température régnant dans la colonne à plateaux se situe dans la plage de 10 °C à 160 °C.

5. Procédé selon les revendications 1 à 4, dans lequel on met en oeuvre, à titre de colonne à plateaux, une colonne à plateaux du type à écoulement transversal ou une colonne à plateaux du type à double flux.
